# EUROPÄISCHE PATENTANMELDUNG

(11) **EP 0 978 688 A2**
(43) Veröffentlichungstag der Anmeldung: **09.02.2000**
(21) Anmeldenummer: 99114320.7
(22) Anmeldetag: 21.07.1999
(51) Int. Cl.: F23N 1/00

(54) **Gasarmatur mit einem Regelventil und einem Startgasventil**

(30) Priorität: 04.08.1998 DE 19835058; 15.02.1999 DE 19906286
(71) Anmelder: ROBERT BOSCH GMBH, 70442 Stuttgart (DE)
(72) Erfinder: Kuschnir, Michael, 73249 Wernau (DE); Jerke, Martin, 70794 Filderstadt (DE); Prestle, Thomas, 72622 Nuertingen (DE); Reisser, Berni, 73274 Notzingen (DE)

(57) **Zusammenfassung**

Die Erfindung bezieht sich auf eine Gasarmatur mit einem Regelventil und einem Startgasventil und mit mindestens einem wärmebedarfsabhängig gesteuerten Stellglied.

Es wird vorgeschlagen, daß das Sicherheits- bzw. Startgasventil (2) koaxial zum Stellglied (13) und zum Regelventil (1) angeordnet und sein Schließglied (20) unmittelbar vom Stellglied (13) beeinflußt ist. Dadurch ist erreicht, daß die dem Stellglied (13) zugeordneten Schließfedern (22, 24) keine Hebelkräfte auf das Stellglied (13) ausüben und bei Anordnung des Startgasventils (2) im Hauptgasweg (5, 7, 9) auch eine zusätzliche Sicherheitsfunktion gegeben ist.

## Beschreibung

### Stand der Technik

Die Erfindung geht aus von einer Gasarmatur nach der Gattung des Hauptanspruchs. Bei einer bekannten Ausführung einer Gasarmatur dieser Gattung ist das Startgas- bzw. Sicherheitsventil seitlich versetzt neben dem Regelventil in einem das Regelventil umgehenden Startgaskanal angeordnet. Bei dieser Ausführung übt die Schließfeder des Startgasventils eine Hebelkraft auf das Stellglied aus, die eine erhöhte Reibung zwischen dem Stellglied und seiner Führung verursacht. Um diesem Umstand Rechnung zu tragen, müssen die die Stellkraft erzeugenden Mittel, vorzugsweise Elektromagnete, entsprechend kräftig bemessen werden.

### Vorteile der Erfindung

Die erfindungsgemäße Anordnung mit den Merkmalen des Hauptanspruchs hat demgegenüber den Vorteil, daß die Schließfedern keine Hebelkräfte auf das Stellglied ausüben und das daher die Mittel zum Erzeugen der Stellkraft entsprechend schwächer als bei der bekannten Anordnung bemessen werden können. Außerdem ergibt sich ein gedrängter Aufbau der Gasarmatur, der ohne eine seitliche Gehäuseausladung zur Aufnahme des Startgas- bzw. Sicherheitsventil auskommt.

Durch die in den Unteransprüchen aufgeführten Merkmale sind vorteilhafte Ausgestaltungen der Anordnung nach dem Hauptanspruch möglich.

Besonders vorteilhaft ist es, wenn die Ventilöffnung des Startgasventils im Hauptgasweg angeordnet ist und ein Ende eines die Regelventilöffnung umgehenden Startgaskanals zwischen den beiden Ventilöffnungen an den Hauptgasweg angeschlossen ist. Bei dieser Anordnung übt das Startgasventil auch die Funktion eines den Hauptgasweg in den Betriebspausen zusätzlich schließenden Sicherheitsventiles aus.

Die über den Startgaskanal gelangende Startgasmenge kann in vorteilhafter Weise mit Hilfe einer Einstell- bzw. Drosselschraube entsprechend den Einsatzbedingungen und/oder des verwendeten Brennertyps variiert werden.

Die weiteren Unteransprüche enthalten konstruktive Maßnahmen, welche die einwandfreie Funktion der Gasarmatur sicherstellen und deren Zusammenbau erleichtern.

Das Schließglied des Startgasventils kann fest mit dem Stellglied verbunden oder auch pendelnd auf diesem oder einem mit dem Stellglied verbundenen Stößel gelagert sein.

### Zeichnung

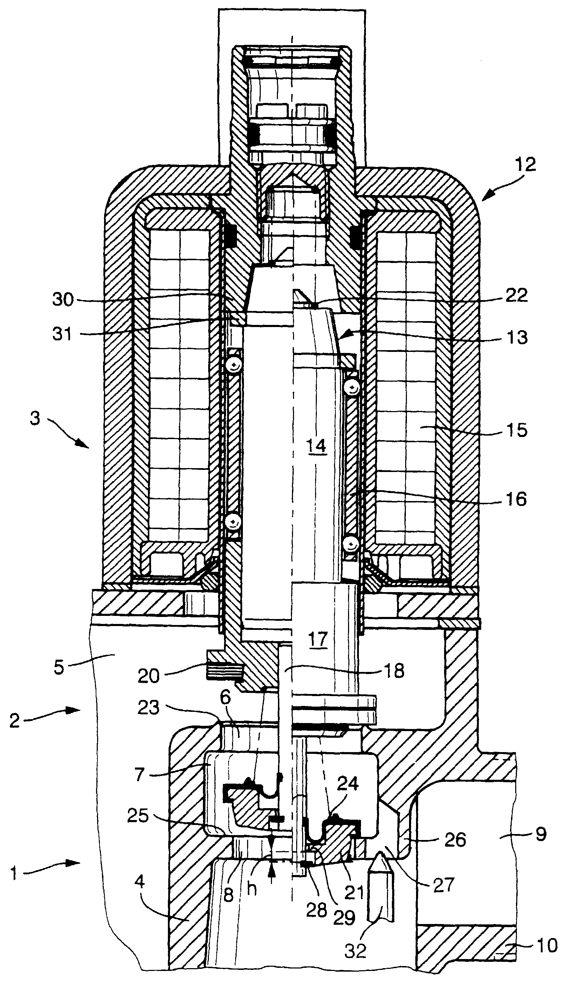

Ein Ausführungsbeispiel der Erfindung ist in der Zeichnung dargestellt und in der nachfolgenden Beschreibung näher erläutert. Die einzige Figur zeigt einen Längsschnitt durch ein Regelventil und ein Startgas- bzw Sicherheitsventil samt elektromagnetischem Stellantrieb einer Gasarmatur in zwei verschiedenen Betriebsstellungen.

### Beschreibung des Ausführungsbeispiels

Die Gasarmatur hat ein Regelventil 1 und ein Startgasventil 2, denen gemeinsam ein elektromagnetischer Stellantrieb 3 zugeordnet ist. Die beiden Ventile 1 und 2 sind in einem Gehäuse 4 angeordnet, das eine den Ventilen vorgelagerte Eingangskammer 5 enthält. Aus dieser führt eine Ventilöffnung 6 des Startgasventils 2 in eine Zwischenkammer 7, die über eine Ventilöffnung 8 des Regelventils 1 mit einer Ausgangskammer 9 in einem Auslaßstutzen 10 verbunden ist.

Der Stellantrieb 3 hat einen wärmebedarfsabhängig gesteuerten Elektromagneten 12, der auf ein insgesamt mit der Bezugszahl 13 bezeichnetes Stellglied einwirkt. Dieses hat eine Achse 14 aus magnetisierbarem Stoff, die in der Magnetspule 15 durch ein Rollenlager 16 beweglich gelagert ist. Die Achse 14 ist fest mit einem in die Magnetspule 15 eintauchenden Ankerstück 17 aus magnetisierbaren Stoff verbunden, auf welches der erregte Elektromagnet 12 eine nach oben gerichtete Stellkraft ausübt. Im Ankerstück 17 ist ein Stößel 18 befestigt, der durch die beiden Ventilöffnungen 6 und 8 hindurchragt.

Das Ankerstück 17 ist einstückig mit einem Schließglied 20 des Startgasventiles 2 verbunden. Auf dem Stößel 18 ist ein Regelventilkörper 21 verschiebbar gelagert. Auf das Stellglied 13 wirkt von oben eine erste Schließfeder 22 ein, die über das Stellglied 13 das Schließglied 20 gegen seinen Ventilsitz 23 zu schieben sucht.

Auf das Stellglied 13 wirkt von unten eine zweite Schließfeder 24 ein, die schwächer als die erste Schließfeder 22 bemessen ist. Die Schließfeder 24 stützt sich am Regelventilkörper 21 ab, wobei sie diesen gegen einen Ventilsitz 25 an einer Gehäuseschulter 26 zu schieben sucht. Die Gehäuseschulter 26 enthält einen Startgaskanal 27, der vom Regelventilkörper 21 auch in der Schließlage nicht überdeckt ist und daher die Zwischenkammer 7 ständig mit der Ausgangskammer 9 verbindet. Mit Hilfe einer Einstellschraube 32 kann die Startgasmenge entsprechend den Einsatzbedingungen und/oder in Abhängigkeit des verwendeten Brennertyps eingestellt werden. Am Stößel 18 ist nach dem Aufschieben des Regelventilkörpers 21 ein Bund 28 angebracht, der mit einer Gegenschulter 29 am Regelventilkörper 21 wie im folgenden beschrieben zusammenarbeitet.

Außer der dargestellten Ventilkombination ist die Gasarmatur wie üblich und daher nicht gezeigt mit einem eingangsseitigen Sicherheitsventil und einem Druckregler versehen.

Die beiden Schließfedern 22 und 24 sind so aufeinander abgestimmt und die anderen Teile sind so bemessen, daß bei stromlosen Elektromagneten 12 die beiden Ventile 1 und 2, wie in der rechten Bildhälfte dargestellt, geschlossen sind. In dieser Stellung ist zwischen dem Bund 28 und der Gegenschulter 29 am Regelventilkörper 21 ein Abstand h vorhanden. Beim Auftreten von Wärmebedarf zieht der Elektromagnet 12 das Stellglied 13 nach oben an, wobei zunächst nur das Startgasventil 2 geöffnet wird und Startgas über den Startgaskanal 27 zum Auslaßstutzen 10 strömt. In dieser ersten Phase der Anzugsbewegung, dem Vorhub, arbeitet die Stellkraft gegen eine erste Federkraftstufe, die sich aus der Differenz der gegeneinander gerichteten Kräfte der Schließfedern 22 und 24 ergibt.

Nach Zurücklegen des Vorhubs stößt der Bund 28 an den Regelventilkörper 21 an, wobei nach der weiteren Hubbewegung auch der Regelventilkörper 21 angehoben und die Ventilöffnung 8 entsprechend der Wärmeanforderung freigegeben wird. In dieser zweiten Phase der Anzugsbewegung ist die Schließfeder 24 kurzgeschlossen, so daß sich eine zweite Federkraftstufe ergibt, in welcher die Stellkraft allein gegen die Schließfeder 22 arbeitet. Bei maximaler Wärmeanforderung nehmen die Teile die in der linken Bildhälfte dargestellte Lage ein, in welcher ein unmagnetischer Ring 31 des Stellglieds 13 an einer Schulter 30 am Elektromagneten 12 anliegt. Der deutliche Federkraftsprung nach Zurücklegen des Vorhubs kann in der Regeleinrichtung eines die Gasarmatur enthaltenden Heizgerätes vorteilhaft verarbeitet werden.

## Patentansprüche

1. Gasarmatur mit einem Regelventil und einem Sicherheits- bzw Startgasventil und mit mindestens einem wärmebedarfsabhängig gesteuerten Stellglied, dadurch gekennzeichnet, daß das Startgasventil (2) koaxial zum Stellglied (13) und zum Regelventil (1) angeordnet und sein Schließglied (20) unmittelbar vom Stellglied (13) beeinflußt ist.

2. Gasarmatur nach Anspruch 1, dadurch gekennzeichnet, daß die Ventilöffnung (6) des Startgasventils (2) im Hauptgasweg (5, 7, 9) angeordnet ist und ein Ende eines die Regelventilöffnung (8) umgehenden Startgaskanals (27) zwischen den beiden Ventilöffnungen (6, 8) an den Hauptgasweg (5, 7, 9) angeschlossen ist.

3. Gasarmatur nach Anspruch 1 oder 2, dadurch gekennzeichnet, daß der Querschnitt des Startgaskanals (27) mit Hilfe einer Einstellschraube (32) veränderbar ist.

4. Gasarmatur nach einem der vorhergehenden Ansprüche, gekennzeichnet durch folgende Merkmale:
a) auf das Stellglied (13) wirkt ständig eine der wärmebedarfsabhängig gesteuerten Stellkraft entgegenwirkende erste Schließfeder (22) ein, die über das Stellglied (13) das Schließglied (20) des Startgasventils (2) gegen seinen Ventilsitz (23) drückt
b) auf das Schließglied (20) des Startgasventils (2) und über dieses auf das Stellglied (13) wirkt entgegen der ersten Schließfeder (22) eine zweite, schwächere Schließfeder (24) ein, die sich auf dem Regelventilkörper (21) abstützt und diesen gegen seinen Ventilsitz (25) drückt,
c) der Regelventilkörper (21) ist mit dem Stellglied (13) über eine Schleppverbindung (28, 29) gekoppelt, die wirksam ist und die zweite Schließfeder (24) kurzschließt, wenn das Stellglied (13) den Vorhub h zurückgelegt hat.

5. Gasarmatur nach Anspruch 4, dadurch gekennzeichnet, daß der Regelventilkörper (21) verschiebbar auf dem Stellglied (13) bzw. einem mit diesem fest verbundenen Stößel (18) gelagert und durch die zweite Schließfeder (24) gegen einen Bund (28) am Stellglied (13) bzw. Stößel (18) gedrückt ist.
